(19) **Europäisches Patentamt / European Patent Office / Office européen des brevets**

(11) **EP 4 604 521 A1**

(12) **EUROPEAN PATENT APPLICATION**
published in accordance with Art. 153(4) EPC

(43) Date of publication:
**20.08.2025 Bulletin 2025/34**

(21) Application number: **23877754.4**

(22) Date of filing: **13.10.2023**

(51) International Patent Classification (IPC):
*H04N 19/11* (2014.01)    *H04N 19/593* (2014.01)
*H04N 19/70* (2014.01)    *H04N 19/176* (2014.01)

(52) Cooperative Patent Classification (CPC):
H04N 19/11; H04N 19/176; H04N 19/593;
H04N 19/70

(86) International application number:
**PCT/KR2023/015836**

(87) International publication number:
**WO 2024/080831 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.10.2022 KR 20220131782**

(71) Applicant: **LG Electronics Inc.**
**Yeongdeungpo-gu**
**Seoul 07336 (KR)**

(72) Inventors:
• **HONG, Myungoh**
  **Seoul 06772 (KR)**
• **LIM, Jaehyun**
  **Seoul 06772 (KR)**
• **YOO, Sunmi**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD AND DEVICE USING PREDICTION COMBINING-BASED INTRA-SCREEN PREDICTION, AND METHOD FOR TRANSMITTING BITSTREAM**

(57)    An image encoding/decoding method and device are provided. An image decoding method by which an image decoding device performs, according to one embodiment of the present disclosure, may comprise the steps of: obtaining template-based intra prediction information of a current block; generating two or more prediction blocks for the current block on the basis of the template-based intra prediction information; and restoring the current block on the basis of a weighted sum of the two or more prediction blocks, and a weight for each prediction block used in the weighted sum may be determined on the basis of a template matching-based cost.

[FIG. 8]

**Description**

[Technical Field]

The present disclosure relates to an image encoding/decoding method and device, and more particularly, to an image encoding/decoding method and device using intra-screen prediction based on combination between prediction blocks and a method of transmitting a bitstream generated using the image encoding method/device of the present disclosure.

[Background Art]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

[Disclosure]

[Technical Problem]

The present disclosure is directed to providing an image encoding/decoding method and device with improved encoding/decoding efficiency.

The present disclosure is also directed to providing a method and device for encoding/decoding a still image or video.

The present disclosure is also directed to providing an image coding technology using intra-screen prediction based on prediction combination.

The present disclosure is also directed to providing a technology for combining several prediction blocks which are predicted using an intra mode derived from a template-based intra mode derivation (TIMD) mode.

The present disclosure is also directed to providing a technology for combining a prediction block predicted using a planar mode with a prediction block predicted using a mode other than the planar mode.

The present disclosure is also directed to providing a method and device for transmitting a bitstream which is generated using an image encoding method or device according to the present disclosure.

The present disclosure is also directed to providing a recording medium that stores a bitstream which is generated using an image encoding method or device according to the present disclosure.

The present disclosure is also directed to providing a recording medium storing a bitstream that is received and decoded by an image decoding device according to the present disclosure and used for reconstructing an image.

Technical objects of the present disclosure are not limited to those described above, and other technical objects that have not been described above will be clearly understood by those skilled in the technical field to which the present disclosure pertains from the following description.

[Technical Solution]

One aspect of the present disclosure provides a method of decoding an image including obtaining template-based intra prediction information of a current block, generating two or more prediction blocks for the current block on the basis of the template-based intra prediction information, and reconstructing the current block on the basis of a weighted sum of the two or more prediction blocks, wherein a weight for each prediction block used for the weighted sum is determined on the basis of a template matching-based cost.

Another aspect of the present disclosure provides a method of encoding an image including determining a current block to be subjected to template-based intra prediction, generating two or more prediction blocks for the current block on the basis of the template-based intra prediction, and calculating a weighted sum of the two or more prediction blocks for the current block, wherein a weight for each prediction block used for the weighted sum is determined on the basis of a template matching-based cost.

Another aspect of the present disclosure provides a method of transmitting a bitstream including transmitting a bitstream generated using an image encoding method, wherein the image encoding method includes determining a current block to be subjected to template-based intra prediction, generating two or more prediction blocks for the current block on the basis of the template-based intra prediction, and calculating a weighted sum of the two or more prediction blocks for the current block, wherein a weight for each prediction block used for the weighted sum is determined on the basis of a template matching-based cost.

A bitstream generated using an image encoding device or an image encoding method may be transmitted.

A bitstream generated using an image encoding method may be stored or recorded on a computer-readable medium.

A bitstream generated using an image encoding method may be transmitted by a bitstream transmission device.

The features of the present disclosure briefly summarized above are merely illustrative aspects of the detailed description of the present disclosure and do not limit the scope of the present disclosure.

[Advantageous Effects]

According to the present disclosure, it is possible to provide an image encoding/decoding method and device with improved encoding/decoding efficiency.

According to the present disclosure, it is possible to provide an image encoding/decoding technology with improved coding quality.

According to the present disclosure, it is possible to improve prediction performance by combining several prediction blocks while intra-screen encoding is performed on a still image or video.

According to the present disclosure, it is possible to provide a method or device for transmitting a bitstream which is generated using an image encoding method or device according to the present disclosure.

According to the present disclosure, it is possible to provide a recording medium that stores a bitstream which is generated using an image encoding method or device according to the present disclosure.

According to the present disclosure, it is possible to provide a recording medium storing a bitstream that is received and decoded by an image decoding device according to the present disclosure and used for reconstructing an image.

Effects of the present disclosure are not limited to those described above, and other effects that have not been described above will be clearly understood by those skilled in the technical field to which the present disclosure pertains from the following description.

[Description of Drawings]

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a diagram schematically showing a template-based intra mode derivation (TIMD) technique to which an embodiment of the present disclosure is applicable.

FIGS. 5 and 6 are diagrams schematically showing a decoder-side intra mode derivation (DIMD) technique to which an embodiment of the present disclosure is applicable.

FIG. 7 is a diagram schematically illustrating an intra prediction mode to which an embodiment of the present disclosure is applicable.

FIG. 8 is a flowchart schematically illustrating a prediction combination method according to an embodiment of the present disclosure.

FIG. 9 is a flowchart schematically illustrating an image decoding method according to an embodiment of the present disclosure.

FIG. 10 is a flowchart schematically illustrating an image encoding method according to an embodiment of the present disclosure.

FIG. 11 is a view showing a content streaming system to which an embodiment of the present disclosure is applicable.

[Modes of the Invention]

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The chroma component block of the current block may be expressed by including an explicit description of a chroma component block such as "chroma block" or "current chroma block."

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

Overview of video coding system

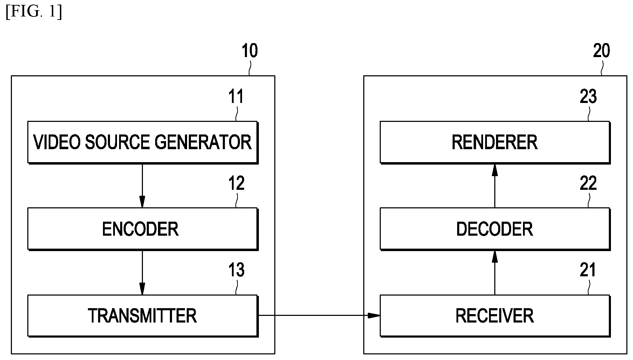

FIG. 1 is a view schematically showing a video coding system to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoder 12 and a transmitter 13. The decoding device 20 according to an embodiment may include a receiver 21, a decoder 22 and a renderer 23. The encoder 12 may be called a video/image encoding apparatus, and the decoder 22 may be called a video/image decoding apparatus. The transmitter 13 may be included in the encoder 12. The receiver 21 may be included in the decoder 22. The renderer 23 may include a display and the display may be configured as a separate device or an external component.

The video source generator 11 may obtain a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoder 12 may encode an input video/image. The encoder 12 may perform a series of procedures such as prediction, transform, and quantization for compression and coding efficiency. The encoder 12 may output encoded data (encoded video/image information) in the form of a bitstream.

The transmitter 13 may transmit the encoded video/image information or data output in the form of a bitstream to the receiver 21 of the decoding device 20 through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a separate transmission device from the encoder 120. In this case, the transmission device includes at least one processor that obtains encoded video/image information or data output in the form of a bitstream and a transmitter that delivers it in the form of a file or streaming. The receiver 21 may extract/receive the bitstream from the storage medium or network and transmit the bitstream to the decoder 22.

The decoder 22 may decode the video/image by performing a series of procedures such as dequantization, inverse transform, and prediction corresponding to the operation of the encoder 12.

The renderer 23 may render the decoded video/image. The rendered video/image may be displayed through the display.

Overview of image encoding apparatus

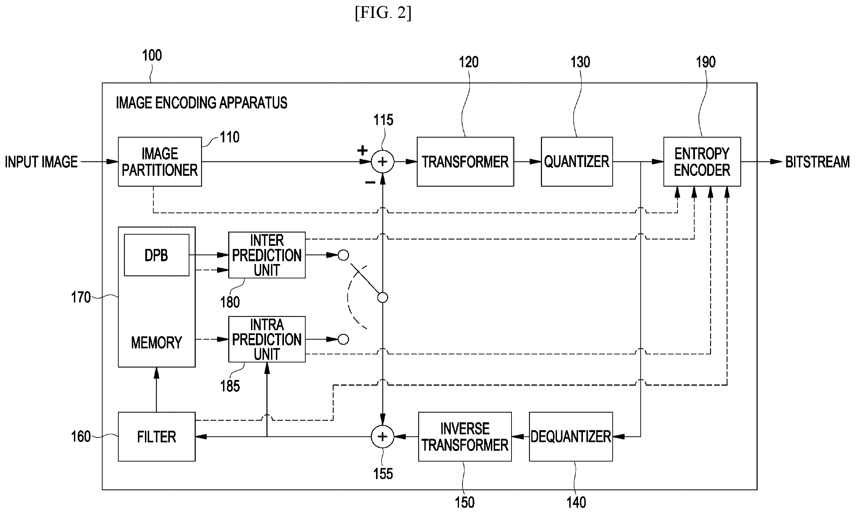

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an image encoding apparatus 100 or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be obtained by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth obtained by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-angular modes and a plurality of directional modes. The nondirectional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform obtained based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

Overview of image decoding apparatus

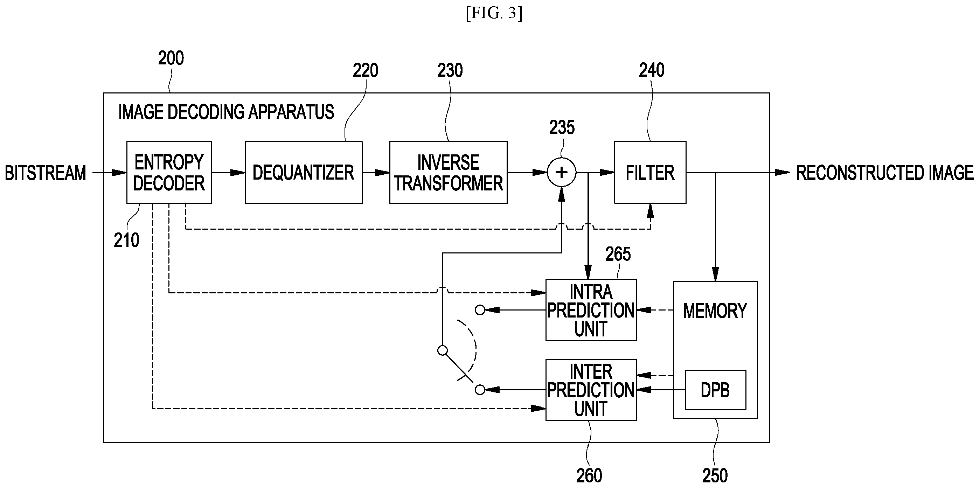

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

**EP 4 604 521 A1**

All or at least some of a plurality of components configuring the image decoding apparatus 200 may be configured by a hardware component (e.g., an image decoding apparatus 200 or a processor) according to an embodiment. In addition, the memory 250 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus 100. Thus, the processing unit of decoding may be a coding unit, for example. The coding unit may be obtained by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus 100 of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus 200 may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus 100 may be further configured as an internal/external element of the image decoding apparatus 200, or the receiver may be a component of the entropy decoder 210.

Meanwhile, the image decoding apparatus 200 according to the present disclosure may be referred to as a video/image/picture decoding apparatus. The image decoding apparatus 200 may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus 100. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

Overview of CTU partitioning

As described above, a CU may be obtained by recursively partitioning a CTU or a largest coding unit (LCU) according to a quad-tree binary-tree ternary-tree (QT/BT/TT) structure. For example, a CTU may be partitioned first according to a QT structure. Subsequently, leaf nodes of the QT structure may be further partitioned according to a multi-type tree structure.

Partitioning according to a QT involves quartering the current CU (or CTU). According to a QT, the current CU may be partitioned into four CUs with the same width and the same height. When the current CU is not partitioned according to a QT structure any more, the current CU corresponds to a leaf node of the QT structure. A CU corresponding to a leaf node of a QT structure is not partitioned any more and may be used as the final coding unit described above. Alternatively, a CU corresponding to a leaf node of a QT structure may be further partitioned according to a multi-type tree structure.

Generation of an MPM candidate list

In general, when an image is partitioned into blocks, a current block to be coded and neighboring blocks have similar image features. Accordingly, the current block and the neighboring blocks are highly likely to have the same intra prediction mode or similar intra prediction modes. Therefore, an encoder may use intra prediction modes of the neighboring blocks to encode an intra prediction mode of the current block.

For example, an encoder/decoder may generate a most probable mode (MPM) list for the current block. The MPM list may be referred to as an MPM candidate list. Here, an MPM may be a mode that is used to improve coding efficiency during coding of an intra prediction mode in consideration of similarity between a current block and neighboring blocks. As described above, the MPM list may or may not include a planar mode. For example, when the MPM list includes the planar mode, the number of candidates for the MPM list may be six. When the MPM list does not include the planar mode, the number of candidates for the MPM list may be five.

The encoder/decoder may generate an MPM list including six MPMs.

To generate an MPM list, the following types of modes may be taken into consideration.

Default intra modes
Neighbor intra modes
Intra prediction modes (IPMs) derived from neighbor inter modes
Decoder-side intra mode derivation (DIMD) modes
Derived intra modes

For the neighbor intra modes, neighboring blocks, that is, a left neighboring block, an upper neighboring block, a lower-left neighboring block, an upper-right neighboring block, an upper-left neighboring block, and the like may be taken into consideration. When a neighbor intra mode is utilized as an MPM, the order of input may vary in accordance with size information of the current block. For example, when a height of a block is greater than or equal to a width of the block, an intra mode of an upper neighboring block may be first considered, and then an intra mode of a left neighboring block may be taken into consideration.

Even when a neighboring block has been coded in an inter mode rather than an intra mode, intra mode information may be obtained from an IPM buffer. When a motion vector of a neighboring inter block indicates a position of an intra mode, the intra mode may be stored in the IPM buffer. The intra mode stored in the IPM buffer may be utilized as an MPM mode of a neighboring block.

MPM candidates may be generated using DIMD which has been described in 1.4.10. When the current block is not in a DIMD mode, an intra model derived using DIMD may be utilized as an MPM candidate.

As described above, when the MPM list is generated not to include the planar mode, the planar mode may be excluded from the list, and the number of MPM list candidates may be set to five.

The above-described MPM list generation method may be used when matrix-based intra prediction (MIP) is not applied to the current block. For example, the above-described MPM list generation method may be utilized to derive an intra prediction mode used in linear interpolation intra prediction (LIP), position dependent intra prediction combination (PDPC), multiple reference line (MRL), or intra sub-partition (ISP) intra prediction or normal intra prediction. Meanwhile, the left neighboring block or the upper neighboring block may be coded on the basis of the above-described MIP. In other words, MIP may be applied to coding of the left neighboring block or the upper neighboring block. In this case, it is inappropriate to use an MIP intra prediction mode number of the neighboring block (left neighboring block/upper neighboring block) to which MIP has been applied, without any change in the MPM list for the current block to which MPM has not been applied. Therefore, for example, an intra prediction mode of the neighboring block (left neighboring block/upper neighboring block) to which MIP has been applied may be considered a direct current (DC) mode or the planar mode. As another example, an intra prediction mode of the neighboring block (left neighboring block/upper neighboring block) to which MIP has been applied may be mapped to a general intra prediction mode on the basis of a mapping table and used for MPM list generation. In this case, the mapping may be performed on the basis of the block size type of the current block. For example, the mapping table may be provided as follows.

[Table 1]

| MIPIP IntraPredMode[ xNbX ][ yNbX ] | Block size type MipSizeId | | |
|---|---|---|---|
| | 0 | 1 | 2 |
| 0 | 0 | 0 | 1 |
| 1 | 18 | 1 | 1 |
| 2 | 18 | 0 | 1 |
| 3 | 0 | 1 | 1 |
| 4 | 18 | 0 | 18 |
| 5 | 0 | 22 | 0 |
| 6 | 12 | 18 | 1 |
| 7 | 0 | 18 | 0 |
| 8 | 18 | 1 | 1 |
| 9 | 2 | 0 | 50 |
| 10 | 18 | 1 | 0 |
| 11 | 12 | 0 | |

(continued)

| MIPIP IntraPredMode[ xNbX ][ yNbX ] | Block size type MipSizeId | | |
|---|---|---|---|
| | 0 | 1 | 2 |
| 12 | 18 | 1 | |
| 13 | 18 | 0 | |
| 14 | 1 | 44 | |
| 15 | 18 | 0 | |
| 16 | 18 | 50 | |
| 17 | 0 | 1 | |
| 18 | 0 | 0 | |
| 19 | 50 | | |
| 20 | 0 | | |
| 21 | 50 | | |
| 22 | 0 | | |
| 23 | 56 | | |
| 24 | 0 | | |
| 25 | 50 | | |
| 26 | 66 | | |
| 27 | 50 | | |
| 28 | 56 | | |
| 29 | 50 | | |
| 30 | 50 | | |
| 31 | 1 | | |
| 32 | 50 | | |
| 33 | 50 | | |
| 34 | 50 | | |

Here, MIP IntraPredMode[IntraPredMode[ xNbX ][ yNbX ] indicates an MIP intra prediction mode of a neighboring block (left neighboring block/upper neighboring block), and block size type MipSizeId indicates a block size type of a neighboring block or the current block. Numbers under the block size type values 0, 1, and 2 indicate general intra prediction modes to which MIP intra prediction modes are mapped in cases of corresponding block size types.

For example, when the current block has a block size type of 0 and an MIP intra prediction mode number of a neighboring block is 10, a mapped general intra prediction mode number may be 18.

However, the mapping relationships are examples and may be changed.

Meanwhile, when MIP is applied to the current block, an MPM list for the current block to which MIP is applied may be separately generated. The MPM list may be called by various names such as an MIP MPM list (or an MPM list for MIP, candMipModeList) and the like, to be distinguished from an MPM list of a case where MIP is not applied to the current block. Hereinafter, the MPM list is referred to as "MIP MPM list" to be distinguished therefrom but may also be called "MPM list."

The MIP MPM list may include n candidates, and for example, n may be three. The MIP MPM list may be generated on the basis of the left neighboring block and the upper neighboring block of the current block. Here, the left neighboring block may be the uppermost one of neighboring blocks adjacent to a left boundary of the current block. Also, the upper neighboring block may be the leftmost one of neighboring blocks adjacent to an upper boundary of the current block.

For example, when MIP is applied to the left neighboring block (and when a block size type of the left neighboring block is identical to the block size type of the current block), the first candidate intra prediction mode (or candMipModeA) may be set to be identical to an MIP intra prediction mode of the left neighboring block. Also, for example, when MIP is applied to the upper neighboring block (and when a block size type of the upper neighboring block is identical to the block size type of the current block), the second candidate intra prediction mode (or candMipModeB) may be set to be identical to an MIP intra prediction mode of the upper neighboring block. Meanwhile, the left neighboring block or the upper neighboring block may be coded on the basis of intra prediction other than MIP. In other words, in coding the left neighboring block or the upper neighboring block, an intra prediction type other than MIP may be applied. In this case, it is inappropriate to use a general intra prediction mode number of the neighboring block (left neighboring block/upper neighboring block) to which MIP has not been applied, without any change as a candidate intra model for the current block to which MPM has been applied. Therefore, for example, an MIP intra prediction mode of the neighboring block (left neighboring block/upper neighboring block) to which MIP has not been applied may be considered an MIP intra prediction mode of a specific value (e.g., 0, 1, 2, or the like). As another example, a general intra prediction mode of the neighboring block (left neighboring block/upper neighboring block) to which MIP has not been applied may be mapped to an MIP intra prediction mode on the basis of a mapping table and used for MIP MPM list generation. In this case, the mapping may be performed on the basis of the block size type of the current block. For example, the mapping table may be provided as follows.

[Table 2]

| IntraPredModeY[ xNbX ][ yNbX ] | Block size type MipSizeId | | |
|---|---|---|---|
| | 0 | 1 | 2 |
| 0 | 17 | 0 | 5 |
| 1 | 17 | 0 | 1 |
| 2, 3 | 17 | 10 | 3 |
| 4, 5 | 9 | 10 | 3 |
| 6, 7 | 9 | 10 | 3 |
| 8, 9 | 9 | 10 | 3 |
| 10, 11 | 9 | 10 | 0 |
| 12, 13 | 17 | 4 | 0 |
| 14, 15 | 17 | 6 | 0 |
| 16, 17 | 17 | 7 | 4 |
| 18, 19 | 17 | 7 | 4 |
| 20, 21 | 17 | 7 | 4 |
| 22, 23 | 17 | 5 | 5 |
| 24, 25 | 17 | 5 | 1 |
| 26, 27 | 5 | 0 | 1 |
| 28, 29 | 5 | 0 | 1 |
| 30, 31 | 5 | 3 | 1 |
| 32, 33 | 5 | 3 | 1 |
| 34, 35 | 34 | 12 | 6 |
| 36, 37 | 22 | 12 | 6 |
| 38, 39 | 22 | 12 | 6 |
| 40, 41 | 22 | 12 | 6 |
| 42, 43 | 22 | 14 | 6 |
| 44, 45 | 34 | 14 | 10 |
| 46, 47 | 34 | 14 | 10 |
| 48, 49 | 34 | 16 | 9 |
| 50, 51 | 34 | 16 | 9 |
| 52, 53 | 34 | 16 | 9 |

(continued)

| IntraPredModeY[ xNbX ][ yNbX ] | Block size type MipSizeId | | |
|---|---|---|---|
| | 0 | 1 | 2 |
| 54, 55 | 34 | 15 | 9 |
| 56, 57 | 34 | 13 | 9 |
| 58, 59 | 26 | 1 | 8 |
| 60, 61 | 26 | 1 | 8 |
| 62, 63 | 26 | 1 | 8 |
| 64, 65 | 26 | 1 | 8 |
| 66 | 26 | 1 | 8 |

Here, IntraPredModeY[ xNbX ][ yNbX ] indicates an intra prediction mode of a neighboring block (left neighboring block/upper neighboring block). The intra prediction mode of a neighboring block may be an intra prediction mode of a luma component (sample), that is, luma intra prediction mode. Block size type MipSizeId indicates a block size type of a neighboring block or the current block. Numbers under the block size type values 0, 1, and 2 indicate MIP intra prediction modes to which general intra prediction modes are mapped in cases of corresponding block size types.

In addition, the neighboring block (e.g., left neighboring block/upper neighboring block) may not be available (e.g., located outside a current picture, located outside a current tile/slice, or the like), or even when MIP has been applied, an MIP intra prediction mode that is not available for the current block in accordance with the block size type may have been used. In this case, a specific MIP intra prediction mode which is predefined for a first candidate and/or a second candidate may be used for the first candidate intra prediction mode or the second candidate intra prediction mode. Also, a specific MIP intra prediction mode predefined for a third candidate may be used as a third candidate intra prediction mode.

For example, the predefined specific MIP intra prediction modes may be provided as shown in the following table. The predefined specific MIP intra prediction modes may be referred to as "MIP default candidate modes."

[Table 3]

| Candidate | Block size type MipSizeId | | |
|---|---|---|---|
| | 0 | 1 | 2 |
| First candidate intra prediction mode or candMipModeList[0] | 17 | 34 | 5 |
| Second candidate intra prediction mode or candMipModeList[1] | 0 | 7 | 16 |
| Third candidate intra prediction mode or candMipModeList[2] | 1 | 4 | 6 |

The MIP MPM list may be generated on the basis of the first candidate intra prediction mode and the second candidate intra prediction mode. For example, when the first candidate intra prediction mode and the second candidate intra prediction mode are different from each other, the first candidate intra prediction mode may be set as a $0^{th}$ candidate of the MIP MPM list (e.g., candMipModeList[0]), and the second candidate intra prediction mode may be set as a $1^{st}$ candidate of the MIP MPM list (e.g., candMipModeList[1]). The predefined specific MIP intra prediction modes may be used as a $2^{nd}$ candidate of the MIP MPM list (e.g., candMipModeList[2]).

On the other hand, when the first candidate intra prediction mode and the second candidate intra prediction mode are identical to each other, one of the first candidate intra prediction model and the second candidate intra prediction mode may be set as the $0^{th}$ candidate of the MIP MPM list (e.g., candMipModeList[0]), and the predefined specific MIP intra prediction modes may be used as the $1^{st}$ candidate of the MIP MPM list (e.g., candMipModeList[1]) and the $2^{nd}$ candidate of the MIP MPM list (e.g., candMipModeList[2]).

As described above, an MIP intra prediction mode of the current block may be derived on the basis of the MIP MPM list. In this case, as described above, an MPM flag, an MPM index, and remaining intra prediction mode information that may be included in the intra prediction mode information for MIP may be referred to as "intra_mipmpm_flag," "intra_mip_mpm_idx," and "intra_mip_mpm_remainder," respectively. A procedure for deriving an MIP intra prediction mode from the MIP MPM list may be performed as described above in FIGS. 1.2.1-1 and 1.2.1-2.

Generation of secondary MPM candidate list

The encoder/decoder may generate a secondary MPM list for the current block. The secondary MPM list may also be referred to as "secondary MPM candidate list." Also, the secondary MPM list may be generated by excluding intra modes of the MPM candidate list. For example, when the MPM list includes mode 50, the secondary MPM list may not include mode 50.

The encoder/decoder may generate M secondary MPM lists, and M may be 16.

To generate a secondary MPM list, the following types of modes may be taken into consideration.

Default intra modes
Neighbor intra modes
IPMs derived from neighbor inter modes
DIMD modes
Derived intra modes

For the neighbor intra modes, neighboring blocks, that is, a left neighboring block, an upper neighboring block, a lower-left neighboring block, an upper-right neighboring block, an upper-left neighboring block, and the like may be taken into consideration. When a neighbor intra mode is utilized as a secondary MPM, the order of input may vary in accordance with size information of the current block. For example, when a height of a block is greater than or equal to a width of the block, an intra mode of an upper neighboring block may be first considered, and then an intra mode of a left neighboring block may be taken into consideration.

Even when a neighboring block has been coded in an inter mode rather than an intra mode, intra mode information may be obtained from the IPM buffer. When a motion vector of a neighboring inter block indicates a position of an intra mode, the intra mode may be stored in the IPM buffer. The intra mode stored in the IPM buffer may be utilized as a secondary MPM mode of a neighboring block.

Template-based intra mode derivation (TIMD)

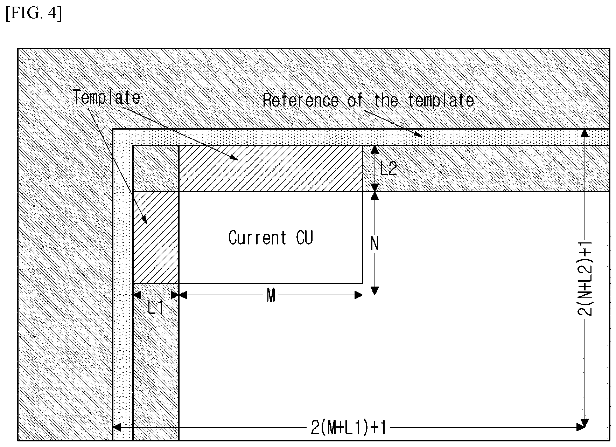

FIG. 4 is a diagram showing a template used in TIMD and a reference sample. Referring to FIG. 4, a sum of absolute transformed differences (SATD) between prediction blocks predicted from a template region and an actual reconstructed sample may be calculated for IPM intra modes of adjacent neighboring intra blocks and inter blocks, and then a mode with a smallest SATD may be selected as an intra mode of the current block. Alternatively, two modes with two smallest SATDs may be selected, and then a weighted sum of prediction blocks for the two prediction modes may be calculated for blending such that the result of blending may be used as a prediction block of the current block.

A method of blending two modes may be applied when the following expression is satisfied.

$$[\text{Expression 1}]$$
$$costMode2 < 2 * costMode1$$

When the above condition is satisfied, the two modes may be blended together to generate a prediction block, and otherwise, only one mode with the minimum SATD value may be selected. A weight ratio for blending two prediction blocks may be calculated in accordance with Expression 2 below.

$$[\text{Expression 2}]$$
$$weight1 = costMode2 / (costMode1 + costMode2)$$
$$weight2 = 1 - weight1$$

DIMD

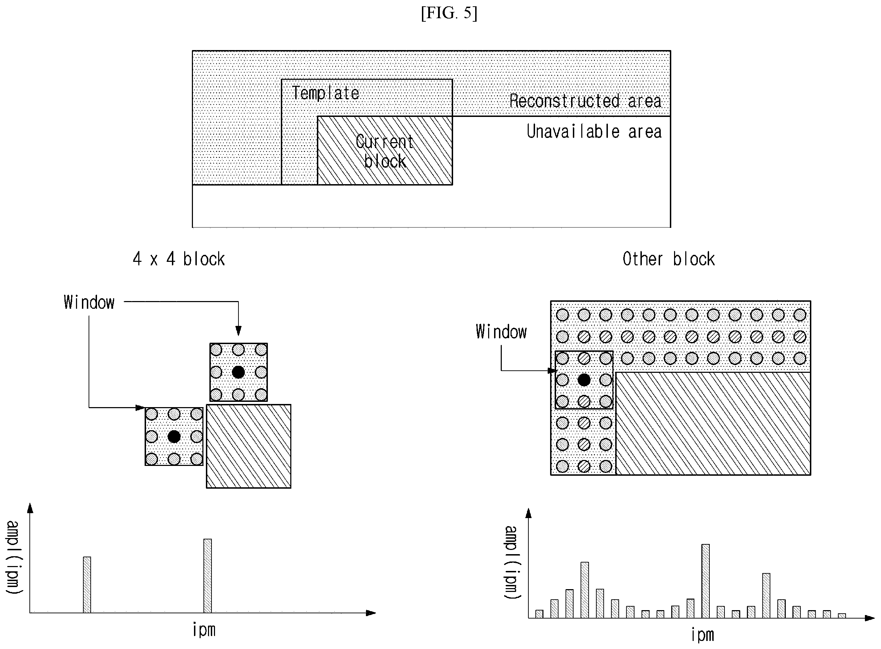

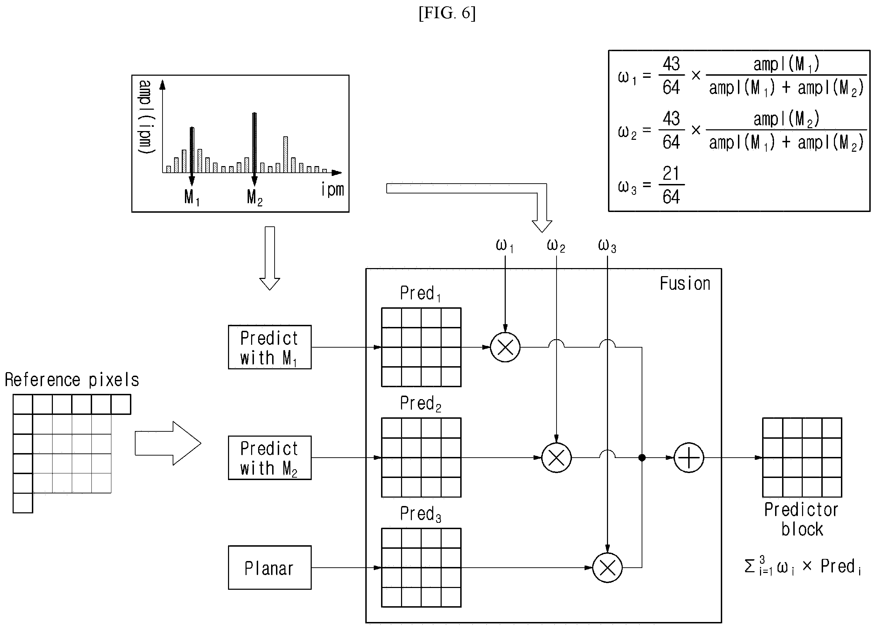

FIG. 5 is a diagram schematically showing a histogram of gradients (HoG), and FIG. 6 is a diagram schematically showing prediction block generation when a DIMD mode is applied.

In the DIMD mode, intra prediction mode information itself may not be transmitted but may be derived by the encoder and decoder and used. First, a horizontal gradient and a vertical gradient are calculated from a second neighboring sample column and row, and a HoG may be generated from the horizontal gradient and the vertical gradient. The HoG may be generated as shown in FIG. 5. The HoG may be obtained by applying a Sobel filter using an L-shaped 3-pixel row and column neighboring the current block. When boundaries of the block are present in different CTUs, texture analysis is not used.

Subsequently, as shown in FIG. 6, two intra modes with largest histogram amplitudes may be selected, and then a prediction block which is predicted using the selected intra modes, and the planar mode may be blended together to generate a final prediction block. A weight may be induced from amplitudes of the histogram. Also, a DIMD flag may be transmitted for each block to determine whether to use DIMD.

Embodiments

As seen from the DIMD technique and the TIMD technique, prediction blocks generated using various modes may be combined to generate a final prediction block, and such a combined block may improve intra prediction performance. Particularly, in the case of a DIMD mode, the planar mode, a first intra mode (1st intra mode), and a second intra mode (2nd intra mode), that is, three prediction blocks, may be combined, which can significantly improve intra prediction performance.

According to the present disclosure, a new prediction block is generated by combining one or more prediction blocks on the basis of a TIMD mode which is a template-based intra-screen prediction mode, and intra prediction performance can be further improved by combining a plurality of prediction blocks.

According to the present disclosure, as seen from the DIMD technique and the TIMD technique, a final prediction block can be generated by combining prediction blocks that are generated using various modes, and such a combined block can lead to an improvement in intra prediction performance. Particularly, in the case of a DIMD mode, the planar mode, a first intra mode, and a second intra mode, that is, three prediction blocks, may be combined, which can significantly improve intra prediction performance.

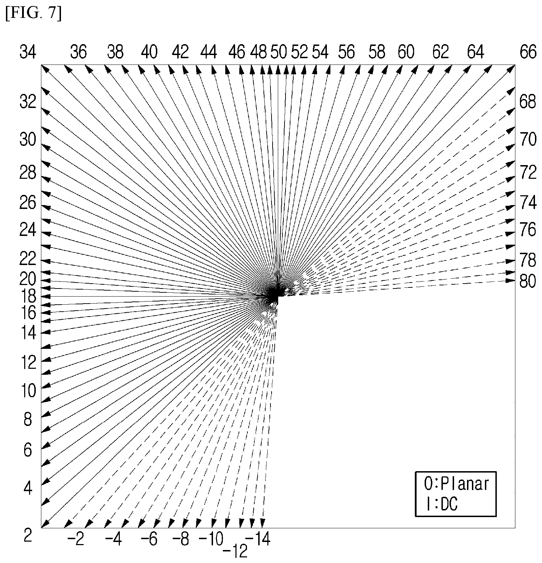

Meanwhile, the following description of a prediction direction and prediction mode of an intra prediction mode is based on the mode numbers shown in FIG. 7. However, this is for clarity of the description, and the present disclosure is not limited thereto.

Hereinafter, embodiments of the present disclosure will be described in detail with reference to the drawings.

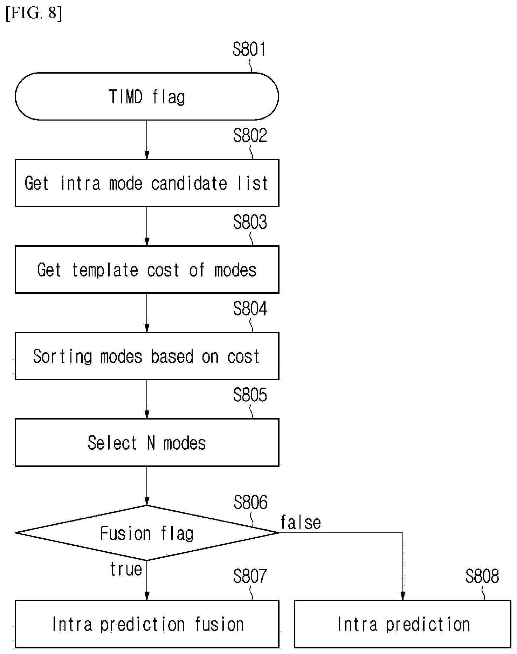

FIG. 8 is a flowchart illustrating a process of deriving a TIMD mode according to an embodiment of the present disclosure. When TIMD information (e.g., a TIMD flag) that may indicate whether to apply the TIMD technique represents that the TIMD mode is applied, TIMD may be applied. In other words, when TIMD is selected (S801), operations may be performed in the following order. Each operation may be omitted, and the order of operations may be changed.

When the TIMD mode is applied, an intra mode candidate list may be obtained (Get intra mode candidate list) (S802). In operation S802, an intra mode candidate list may be generated. The intra mode candidate list may be generated using the MPM list and/or the secondary MPM list described above. For example, the intra mode candidate list may be generated from only intra modes of the MPM list, only intra modes of the secondary MPM list, or intra modes of both lists. Meanwhile, when there is no DC mode, horizontal direction mode, or vertical direction mode in the MPM list and/or secondary MPM list, the intra mode candidate list may be generated to include the mode. Also, nearby modes ipm-k to ipm+k (excluding imp) within a range of k (k is a natural number) from an intra mode ipm included in the MPM list and/or the secondary MPM list may be included in the intra mode candidate list. For example, k may be two. As an example, when a specific mode (e.g., mode 18 (the horizontal direction mode)) is included in the MPM list and/or the secondary MPM list, nearby modes (e.g., modes 16, 17, 19, 20, etc.) of the specific mode (e.g., mode 18) may be included in the intra mode candidate list.

Subsequently, template costs of modes may be calculated (Get template cost of modes) (S803). For example, in operation S803, intra modes of the intra mode candidate list obtained in the previous operation may be utilized. As an example, SATD values or sum of absolute difference (SAD) values between prediction samples, which are generated using intra modes for a left and/or upper template region of the current block, and a reconstructed region may be calculated on the basis of the intra modes of the intra mode candidate list, and compared to calculate template costs.

Subsequently, the modes may be sorted on the basis of the calculated costs (Sorting modes based on cost) (S804). As an example, in operation S804, the intra modes may be sorted in increasing order of template cost. Meanwhile, operation S804 may be performed while the template costs of the modes are calculated. In other words, operation S804 may be included in operation S803.

Subsequently, N modes may be selected (Select N modes) (S805). For example, N (N is a natural number) intra modes may be selected in increasing order of template cost, and a prediction block may be generated using the final N intra modes. As an example, a fixed specific number of modes may be selected and used in accordance with predefined rules between the encoder and decoder. N may be an integer such as 2, 3, or the like. Depending on whether a cost value of each intra candidate mode is lower than a specific threshold, only modes with a cost lower than the threshold may be selected. In other words, when N modes have a cost lower than the threshold, the N modes may be selectively used. As an example, the threshold may be signaled as a bitstream or predefined as a promise between the encoder and decoder and used. In this case, the threshold (e.g., a variable Threshold) may be defined in accordance with the following expression.

[Expression 3]

$$Threshold = \alpha * (iTempWidth * height + iTempHeight * width)$$

For example, a variable $\alpha$ may be any value which is a natural number, and a variable iTempWidth represents a horizontal length of a left template region and may be 0 when the left template region is not used. For example, the variable iTempWidth may be variable in accordance with the size of a current prediction block. As an example, when a horizontal length of the current prediction block is a specific value (e.g., 8) or less, the variable iTempWidth may be a specific value (e.g., 2), and otherwise, may be defined as another specific value (e.g., 4). A variable iTempHeight represents a vertical length of an upper template region and may be 0 when the upper template region is not used. For example, the variable iTempHeight may be variable in accordance with the size of the current prediction block. As an example, when a vertical length of the current prediction block is a specific value (e.g., 8) or less, the variable iTempHeight may be a specific value (e.g., 2), and otherwise, may be defined as another specific value (e.g., 4). In addition, a variable width may be a horizontal length of the current block, and a variable height may be a vertical length of the current block.

Meanwhile, the following may be defined for the N selected intra modes.

1. A variable uiBestCost may be defined. The variable uiBestCost may be a lowest template cost value in the intra mode candidate list. Also, in the operation prior to operation S806 of obtaining fusion information (e.g., a fusion flag) which represents whether to perform fusion, that is, combination, a uiBestCost value may be changed. For example, when the variable uiBestCost is larger than a maximum cost value MaxCost, the uiBestCost value may be changed as follows. As an example, the maximum cost value MaxCost may be a predefined value or a value determined by the encoder.

(1) Template cost values may be additionally calculated for nearby intra modes of an intra mode with the value of the variable uiBestCost. For example, when the intra mode with the value of the variable uiBestCost is a specific mode (e.g., mode 50), template costs may be additionally calculated for nearby modes (e.g., mode 49, mode 51, and the like). Therefore, when the template cost values for the nearby modes are lower than a template cost value for the intra mode with the value of the variable uiBestCost, the variable uiBestCost may be changed to a lower, that is, smaller, value. Here, a method of calculating the cost values may be the same as the above-described operation S803 of calculating template costs of modes.

2. A variable uiSecondaryCost may be defined. The variable uiSecondaryCost may be a second lowest template cost value in the intra mode candidate list.

Also, in the operation prior to the operation S806 of obtaining fusion information (e.g., a fusion flag) which represents whether to perform fusion, that is, combination, a uiSecondaryCost value may be changed. For example, when the variable uiSecondaryCost is larger than the variable MaxCost which is the maximum cost value, a value of the uiSecondaryCost may be changed as follows. As an example, the maximum cost value MaxCost may be a predefined value or a value determined by the encoder.

(1) Template cost values may be additionally calculated for nearby intra modes of an intra mode with the uiSecondaryCost value. For example, when the intra mode with the uiSecondaryCost value is a specific mode (e.g., mode 34), template cost values may be additionally calculated for nearby modes (e.g., mode 33, mode 35, and the like). Therefore, when the template cost values for the nearby modes are smaller than a template cost value for the intra mode with the value of the variable uiSecondaryCost, the variable uiSecondaryCost may be changed to a smaller value. During this process, the variable uiSecondaryCost may have a smaller value than the variable uiBestCost. Here, a method of calculating the cost values may be the same as the above-described method S803 of calculating template costs of modes.

3. A variable $cost_k$ may be defined. The variable $cost_k$ may indicate a $k^{th}$ smallest template cost value for a plurality of (e.g., N) intra modes. Also, in the operation prior to operation S806 of obtaining fusion information (e.g., a fusion flag) which represents whether to perform prediction combination, that is, fusion, a value of the variable $cost_k$ may be changed as follows. For example, when the variable $cost_k$ is larger than the maximum cost value (e.g., MaxCost), a value of the variable $cost_k$ may be changed as follows. ($1 \leq k \leq N$)

(1) Meanwhile, template cost values may be additionally calculated for nearby intra modes of an intra mode with the value of the variable $cost_k$. For example, when the intra mode with the $cost_k$ value is a specific mode (e.g., mode 50), template costs may be additionally calculated for nearby modes (e.g., mode 49, mode 51, and the like).

Therefore, when the template cost values for the nearby modes are smaller than a template cost value for the intra mode with the $cost_k$ value, $cost_k$ may be changed to a smaller value. Here, a method of calculating the cost values may be the same as the above-described method S803 of calculating template costs of modes.

4. A variable MaxCost may be defined. The MaxCost may be a maximum cost value, which may be any value. For example, the variable MaxCost may be calculated in accordance with the following expression.

[Expression 4]

$$MaxCost = (iTempWidth * height + iTempHeight * width)$$

Variables iTempWidth, iTempHeight, height, and width used in Expression 4 have been described above, and thus the redundant description thereof will be omitted.

Subsequently, it may be determined whether to perform intra fusion, that is, intra prediction fusion (S806). For example, whether to perform intra prediction fusion may be determined in accordance with the fusion information (e.g., the fusion flag). In other words, in operation S806, it may be determined whether to perform prediction combination. For example, whether to perform prediction combination may be determined in accordance with a specific condition. As an example, whether to perform prediction combination may be determined under the following conditions.

[Expression 5]

$$1. \text{if}(uiSecondaryCost < uiBestCost \| (uiSecondaryCost - uiBestCost < uiBestCost))$$
$$2. \text{if}(p * uiSecondaryCost < q * uiBestCost)$$
$$3. \text{if}(uiSecondaryCost < uiBestCost \| (p * uiSecondaryCost < q * uiBestCost))$$

When at least one of the above expressions is satisfied, it may be determined to perform prediction combination. For example, in Expression 5, uiBestCost may be an optimal cost value, which is the same as uiBestCost defined during the operation S805 of selecting the N modes. Accordingly, the redundant description thereof will be omitted. Also, a variable uiSecondaryCost which indicates a secondary cost value is the same as uiSecondaryCost defined during the operation S805 of selecting the N modes, and thus the redundant description thereof will be omitted. Meanwhile, p and q may be any values. For example, p and q may be different specific values. As an example, p and q may be determined as 1 and 2, respectively.

Subsequently, prediction blocks predicted using the N selected intra modes may be combined, that is, subjected to intra prediction fusion, on the basis of the application of prediction combination (e.g., when a value of the fusion flag is true) (S807), and the result of intra prediction fusion may be used as a final prediction block. After prediction modes are generated using the selected modes, PDPC is applicable, or after the prediction blocks are combined, PDPC may be applied to the final prediction block. Meanwhile, general intra prediction may be performed on the basis of the non-application of prediction combination (e.g., when the value of the fusion flag is false) (S808). According to general intra prediction, a prediction block generated in a single intra mode may be used as a final prediction block.

According to the embodiment, in the intra prediction fusion operation S807, N prediction blocks may be generated in a plurality of modes, that is, N modes. For example, prediction blocks may be combined on the basis of the following expression.

[Expression 6]

$$Pred_{final} = (a_1 * Pred_1 + a_2 * Pred_2 + ... + a_n * Pred_n) \gg l$$
$$Pred_{final} = (a_1 * Pred_1 + a_2 * Pred_2 + ... + a_n * Pred_n + 2^{(l-1)}) \gg l$$

In the above expression, $Pred_{final}$ may be a final prediction block. Also, $Pred_k$ may be a prediction block that is predicted using an intra mode with a $k^{th}$ smallest template cost. In other words, the plurality of prediction blocks may be sorted in order of template cost and referred to as a first prediction block, an $n^{th}$ prediction block, and the like. Also, $a_1, a_2, ..., a_n$ may be any integers, which may be weights applied to each of the prediction blocks, and $a_1 + a_2 + ... + a_n = 2^l$ may hold. Here, l may be any natural number. N may be the number of prediction blocks combined, and k may be a natural number that is equal to or larger than one and equal to or smaller than N. According to the embodiment, $a_k$ may be calculated on the basis of a lookup table as follows.

[Expression 7]

$$g_{gradDivTable[16]} = \{0,7,6,5,5,4,4,3,3,2,2,1,1,1,1,0\}$$

$$x = Floor(Log2(s1))$$

$$norm_{s1} = ((s1 \ll 4) \gg x) \& 15$$

$$v = g_{gradDivTable[norm_{s1}]} | 8$$

$$x += (norm_{s1} != 0)$$

$$shift = x + 3$$

$$add = (1 \ll (shift-1))$$

$$a_k = (s_0 * v * sum_{weight} + add) \gg shift$$

For example, to apply larger $a_k$, that is, a larger weight, with a lower calculated template cost, s1 and s0 in the above expression may be calculated as follows.

[Expression 8]

$$s1 = cost_1 + cost_2 + ... + cost_N$$

$$s0 = cost_{N-k+1}$$

For example, N may be the number of prediction blocks combined, and $cost_k$ may be a $k^{th}$ lowest template cost value for a plurality of (e.g., N) intra modes. k may be a natural number that is equal to or larger than one and equal to or smaller than N.

As another example, to apply larger $a_k$, that is, a larger weight, with a lower calculated template cost, s1 and s0 may be calculated as follows.

[Expression 9]

$$s1 = (N-1) * (cost_1 + cost_2 + ... + cost_N)$$

$$s0 = cost_1 + cost_2 + ... + cost_N - cost_k$$

For example, N in Expression 9 may be the number of prediction blocks combined, and $cost_k$ may be a $k^{th}$ lowest template cost value for N intra modes. k may be a natural number that is equal to or larger than one and equal to or smaller than N.

As another example, to apply larger $a_k$, that is, a larger weight, with a lower calculated template cost, s1 and s0 may be calculated as follows.

[Expression 10]

$$s1 = (MaxCostValue - cost_1) + (MaxCostValue - cost_2) + ... + (MaxCostValue - cost_N)$$

$$s0 = MaxCostValue - cost_{N-k+1}$$

For example, in Expression 10 above, a variable MaxCostValue may be any cost value larger than $cost_N$, and N template costs may have a smaller value than MaxCostValue at all times. In other words, the variable MaxCostValue may represent any maximum cost value, and for example, MaxCostValue may be equal to $cost_1 + cost_2 + ... + cost_N$. Also, N may be the number of prediction blocks combined, that is, the number of blocks subjected to prediction combination (fusion), $cost_k$ may be a $k^{th}$ lowest template cost value for N intra modes, and k may be a natural number that is equal to or larger than one and equal to or smaller than N.

Meanwhile, $a_N$ may be calculated using $a_N = 2^l - (a_1 + a_2 + ... + a_{N-1})$ by way of example. According to the embodiment, in the TIMD mode, a prediction block based on the planar mode may be combined at all times irrespective of a template cost for the planar mode. In addition, the planar mode may have a fixed weight value. For example, to generate a final prediction block, a fixed weight value which corresponds to a certain ratio (e.g., 1/4 or 1/8) of an overall weight may be applied to a planar prediction block. As an example, when a total weight sum is 64, 16 which is 1/4 of the total weight or 8 which is 1/8 of the total weight may be used as the fixed weight value.

In addition, in the TIMD mode, a weight value derived on the basis of a template cost may be used. The weight value derived on the basis of a template cost may be calculated in the same way as $a_k$, s0, and s1.

According to the embodiment, in the TIMD mode, modes may be sorted in increasing order of template cost. For example, the planar mode may be selected when one or a selective combination of the following conditions is satisfied. In other words, the planar mode may be used as a candidate prediction mode for combination when at least one of the following conditions is satisfied. That is, a prediction block based on the planar mode may be used as a candidate prediction block for prediction combination.

$$[\text{Expression 11}]$$
$$1. \text{if}(planarCost-uiBestCost<uiBestCost)$$
$$2. \text{if}(planarCost-uiSecondaryCost<uiSecondaryCost)$$
$$3. \text{if}(p*planarCost<q*uiBestCost)$$
$$4. \text{if}(p*planarCost<q*uiSecondaryCost)$$
$$5. \text{if}(planarCost<Threshold)$$

A variable uiBestCost is a variable for cost values, which is the same as the variable uiBestCost described in operation S805 of selecting the N modes, and thus the redundant description thereof will be omitted. A variable uiSecondaryCost is likewise the same as the variable uiSecondaryCost described above, and thus the redundant description thereof will be omitted. Also, a variable planarCost related to a template cost of the planar mode may be a cost of a template region calculated for the planar mode in the operation S803 of calculating the template costs. p and q may be any specific values, and for example, may be determined as 1 and 2, respectively.

Meanwhile, when it is determined to apply prediction combination (e.g., the fusion flag is true) in operation S806 of determining whether to perform prediction combination, at least one of the conditions of Expression 11 may be a condition for combination between a prediction block based on the planar mode and another prediction block. In other words, the at least one condition may be applied as a condition for additional combination with the planar mode, and in the operation of determining whether to perform fusion (prediction combination), it may be determined whether the conditions including the at least one condition are satisfied.

Meanwhile, in condition 5 of Expression 11, a variable Threshold may be any value and may be a threshold. Also, for example, the variable Threshold may be determined in accordance with the following expression.

$$[\text{Expression 12}]$$
$$Threshold=\beta*(iTempWidth*height+iTempHeight*width)$$

For example, a variable $\beta$ may be any natural number, and a variable iTempWidth may be the horizontal length of the left template region and may be 0 when the left template region is not used. The variable iTempWidth may be variable in accordance with the size of the current prediction block. For example, when the horizontal length of the current prediction block is a specific value (e.g., 8) or less, iTempWidth may be the specific value (e.g., 2), and otherwise, may be defined as the other specific value (e.g., 4). A variable iTempHeight represents the vertical length of the upper template region and may be 0 when the upper template region is not used. The variable iTempHeight may be variable in accordance with the size of the current prediction block. For example, when the vertical length of the current prediction block is the specific value (e.g., 8) or less, a variable TempHeight may be the specific value (e.g., 2) and otherwise, may be defined as the other specific value (e.g., 4). In addition, a variable width may be the horizontal length of the current block, and a variable height may be the vertical length of the current block.

According to the embodiment, a prediction block based on the planar mode may be combined with another prediction block only when a size of the current block is larger or smaller than or equal to a specific size. In other words, when prediction combination (fusion) is applied, the planar mode may be selected only if a certain condition is satisfied. For example, the planar mode may be additionally combined with another prediction block on the basis of a comparison result (e.g., when the size of the current block is larger than a specific value or is equal to or larger than the specific value) between the size of the current block (e.g., any one of a width and height or a product of the width and height (e.g., width*height)) and the specific value (e.g., 16). As another example, the planar mode may be additionally combined with another prediction block on the basis of a comparison result (e.g., when the size of the current block is smaller than a specific value or is equal to or smaller than the specific value) between the size of the current block (e.g., any one of the width and height or a product of the width and height (e.g., width*height)) and the specific value (e.g., 1024). This condition may be additionally used in combination with conditions 1 to 5 of Expression 11.

Meanwhile, according to the embodiment, it is assumed in the TIMD mode that a cost value for a specific intra mode is a kth cost value. In this case, when the kth cost value satisfies at least one of the following conditions, a prediction block for the specific intra mode may be used as a candidate prediction block for combination. In other words, each prediction block for all intra modes satisfying the following conditions may be used as a candidate for combination, and the number of candidate blocks for combination may be limited to be smaller than a specific number (e.g., M which is a natural number).

[Expression 13]

$$1. \text{if}(Cost_k\text{-}uiBestCost{<}uiBestCost)$$

$$2. \text{if}(Cost_k\text{-}uiSecondaryCost{<}uiSecondaryCost)$$

$$3. \text{if}(p*Cost_k{<}q*uiBestCost)$$

$$4. \text{if}(p*Cost_k{<}q*uiSecondaryCost)$$

$$5. \text{if}(Cost_k{<}uiBestCost\|(p*Cost_k{<}q*uiBestCost))$$

$$6. \text{if}(Cost_k{<}uiSecondaryCost\|(p*Cost_k{<}q*uiSecondaryCost))$$

$$7. \text{if}(p*Cost_k{<}q*Cost_{(k\text{-}1)})$$

$$8. \text{if}(Cost_k{<}Cost_{(k\text{-}1)}\|(p*Cost_k{<}q*Cost_{(k\text{-}1)})))$$

A variable uiBestCost may be the same as the variable uiBestCost described in operation S805 of selecting the N modes. A variable uiSecondaryCost and a variable $Cost_k$ are likewise the same as the variable uiSecondaryCost and the variable $Cost_k$ described in operation S805 of selecting the N modes, respectively. Therefore, the redundant description thereof will be omitted.

When a template cost value for a nearby mode of an intra mode with a $Cost_k$ value is lower than a template cost value for the intra mode with the $Cost_k$ value, $Cost_k$ may be changed to the template cost value of the nearby node, that is, the smaller of the two values. In this process, the cost value $Cost_k$ may have a smaller value than the variable uiBestCost and/or the variable uiSecondaryCost. p and q may be any values and may be calculated to be different values. For example, p may be determined as a specific value (e.g., one), and q may be determined as another specific value (e.g., two). For example, conditions 7 and 9 of Expression 13 above may be applied when k is an integer greater than or equal to two. Meanwhile, the conditions may be subsequently applied as conditions for additional combination with another intra mode when the information (e.g., the fusion flag) representing whether to perform fusion is true (i.e., when the information representing whether to perform fusion presents that fusion is applied) in operation S806 of determining whether to perform prediction combination, and in operation S806 of determining whether to perform fusion, it may also be determined whether the conditions are satisfied.

Meanwhile, when combination of a prediction block is performed, a planar prediction block, that is, a block predicted using the planar mode, may be combined. Here, the block predicted using the planar mode may be a block that is predicted using a horizontal planar mode or a vertical planar mode. For example, a process of generating a prediction block by applying the horizontal planar mode may be related to the following expression.

[Expression 14]

$$pred(x,y){=}((W\text{-}1\text{-}x)*rec(\text{-}1,y){+}(x{+}1)*rec(W,\text{-}1){+}(W{\gg}1)){\gg}\log_2 W$$

For example, a process of generating a prediction block by applying the vertical planar mode may be related to the following expression.

[Expression 15]

$$pred(x,y){=}((H\text{-}1\text{-}y)*rec(x,\text{-}1){+}(y{+}1)*rec(\text{-}1,H){+}(H{\gg}1)){\gg}\log_2 H$$

In Expressions 14 and 15, a prediction sample for the current block may be presented as pred(x, y). In this case, for example, when an upper-left pixel of the current block is at a position (0, 0), x may be an x-axis coordinate of the current block, and y may be a y-axis coordinate of the current block. Also, rec(x, y) may be a pre-reconstructed reference sample at the position (x, y), W may be a width of the current block, and H may be a height of the current block.

Meanwhile, for example, in the case of generating a prediction block in the TIMD mode using a vertical direction mode or nearby modes (e.g., mode 34 to mode 66 and the like) of the vertical direction mode, a prediction mode may be generated using the vertical planar mode, and the prediction block based on the vertical planar mode may be used for prediction combination.

As another example, in the case of generating a prediction block in the TIMD mode using a horizontal direction mode or nearby modes (e.g., mode 2 to mode 33 and the like) of the horizontal direction mode, a prediction mode may be generated using the horizontal planar mode, and the prediction block based on the horizontal planar mode may be used for prediction combination.

According to the embodiment of the present disclosure, it is possible to improve both coding quality and efficiency by performing intra prediction combination (intra fusion) and selecting a prediction mode to be used in prediction combination on the basis of a template cost and the like.

Meanwhile, according to the embodiment, when all or at least one of the following conditions is satisfied, a block predicted on the basis of the planar mode may be combined with another prediction block.

1. A case where the pre-reconstructed block neighboring the current block is coded in the planar mode, and an intra prediction mode of the current block is not the planar mode.
2. A case where the size of the current block is larger or smaller than a specific size.

   (1) For example, only when the size of the current block (e.g., at least one of the width and height of the current block or the product of the width and height of the current block (e.g., width*height)) is larger than a specific value (e.g., 16) or is equal to or larger than the specific value, may the planar prediction block be combined with another prediction block.
   (2) For example, only when the size of the current block (e.g., at least one of the width and height of the current block or the product of the width and height of the current block (e.g., width*height)) is smaller than a specific value (e.g., 1024) or is equal to or smaller than the specific value, may the planar prediction block be combined with another prediction block.

3. A case where additional information (e.g., a planar combination flag) representing whether to combine a planar prediction block is signaled, and a value of the flag is true.
4. A case where at least one of the other combination conditions described above (e.g., Expression 11, Expression 13, or the like) is satisfied in the TIMD mode.

According to the embodiment, a prediction block predicted using the planar mode may be combined with another prediction block. The other prediction block combined with the prediction block predicted using the planar mode may be the following prediction blocks.

1. A prediction block predicted using an intra prediction mode selected from an MPM, a secondary MPM, and a non-MPM.

   (1) Non-MPMs may be remaining intra modes that are not among candidates in the MPM list and the secondary MPM list.

2. In the case of an MRL mode, a prediction block predicted using a non-adjacent reference sample and an intra prediction mode.

   (1) A planar prediction block to be combined may be predicted using a non-adjacent reference sample or an adjacent reference sample.

3. In the case of an ISP mode, a prediction block predicted in sub-block units.

   (1) A planar prediction block to be combined may be generated in sub-block units or CU units. When a planar prediction block is generated in sub-block units, the sub-block units may be combined. Alternatively, the sub-block units may not be combined, and intra modes different from the planar mode may be generated in sub-block units and then combined in CU units.
   (2) In addition, a planar prediction block may be combined with only a specific sub-block. For example, when sub-blocks halved in the vertical or horizontal direction are SB1 and SB2, a planar prediction block may be combined with only the sub-block SB1 or SB2.

4. A prediction block generated in the TIMD mode

(1) A prediction block may be combined irrespective of whether there is a variable timdIsBlended related to TIMD blending or may be combined only when the variable timdIsBlended is 0 or 1.

1) In the TIMD mode, timdIsBlended indicates 1 (=true) when prediction blocks are blended, and indicates 0 (=false) in the case of a single prediction block without blending.

5. A prediction block generated in the MIP mode

The other prediction block which is combined with the prediction block predicted using the planar mode may be a single prediction block or a prediction block obtained by combining two or more prediction blocks. For example, a prediction block which is predicted using an intra prediction mode selected using an MPM, a secondary MPM, or a non-MPM may be obtained by combining a prediction block A which is predicted using a specific intra prediction mode (e.g., m) and a $k^{th}$ reference sample line, and a prediction block B which is predicted using the intra prediction mode m and a $(k+1)^{th}$ reference sample line.

For example, in the case of combining the planar prediction block with another prediction block, a fixed weight value may be applied to the planar prediction block. For example, to generate a final prediction block, a fixed weight value which corresponds to a certain ratio (e.g., w) of an overall weight may be used for the planar mode. w may be any value, and as an example, may be 1/4 or 1/8.

For example, in the case of combining the planar prediction block with another block, a cost value may be derived from a template region neighboring the current block, and a weight value may be used. For example, a method of calculating the weight may be the same as described above, and thus the redundant description thereof will be omitted.

In addition, when a pre-reconstructed block neighboring the current block is coded in the planar mode, a weight of a planar prediction block used for prediction combination may be increased and applied. For example, when a specific ratio (e.g., 1/4) of the overall weight is used for the prediction block predicted using the planar mode and the pre-reconstructed block neighboring the current block is predicted using the planar node, a value (e.g., 1/2) higher than the foregoing specific ratio (e.g., 1/4) of the overall weight may be used as a weight.

When a cost value for the planar mode is within a specific range, that is, when the planar mode is selectable because the cost value of the planar mode is low, during the process of generating another prediction block to be combined with the planar prediction block, the weight of the planar prediction block may be increased and applied. For example, when two prediction blocks are combined in the TIMD mode but the planar mode corresponds to a third low-cost value, the weight of the planar prediction block may be increased more than before.

As described above, the planar prediction block may be a block predicted using the planar mode. In addition, a block predicted using the horizontal planar mode or vertical planar mode may be referred to as a planar prediction block. Meanwhile, the planar prediction block may be based on the horizontal planar mode and combined with another prediction block, and a prediction sample pred(x, y) generated on the basis of the horizontal planar mode may be calculated as follows.

[Expression 16]

$$pred(x,y)=((W-1-x)*rec(-1,y)+(x+1)*rec(W,-1)+(W\gg1))\gg\log_2 W$$

A prediction sample pred(x, y) generated on the basis of the vertical planar mode may be calculated as follows.

[Expression 17]

$$pred(x,y)=((H-1-y)*rec(x,-1)+(y+1)*rec(-1,H)+(H\gg1))\gg\log_2 H$$

In the above expressions, when an upper-left pixel of the current block is at a position (0, 0), x may be an x-axis coordinate of the current block, and y may be a y-axis coordinate of the current block. Also, rec(x, y) may be a reconstructed sample, which is a reference sample, at the position (x, y), W may be a width of the block, and H may be a height of the block.

Meanwhile, as an example, when the other prediction block to be combined with the planar prediction block is generated using a specific intra mode, the planar prediction block may be a vertical planar prediction block. In other words, the planar prediction block may be a block predicted using the vertical planar mode. For example, the specific intra mode may include a vertical direction mode and nearby modes (e.g., mode 34 to mode 66) of the vertical direction mode. As another example, in the case of generating the other prediction block to be combined with the planar prediction block using a specific intra mode, the planar prediction block may be a horizontal planar prediction block. In other words, the planar prediction block may be a block predicted using the horizontal planar mode. For example, the specific intra mode may include a horizontal direction mode and nearby modes (e.g., mode 2 to mode 33) of the horizontal direction mode.

According to the present disclosure, a prediction block predicted using the planar mode can be combined with a prediction block predicted using a mode other than the planar mode, and it is possible to improve prediction performance by combining the planar prediction block with the prediction block.

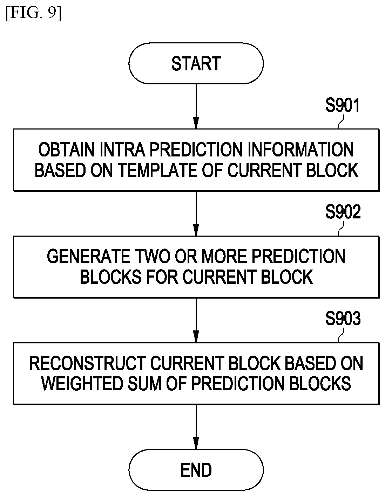

FIG. 9 is a flowchart illustrating an image decoding method that may be performed by an image decoding device according to an embodiment of the present disclosure. Since the image decoding method of FIG. 9 may be based on the above-described embodiment, the redundant description will not be reiterated.

For example, template-based intra prediction information of a current block may be obtained for image decoding (S901). Also, two or more prediction blocks for the current block may be generated on the basis of the template-based intra prediction information (S902). Also, the current block may be reconstructed on the basis of a weighted sum of the two or more prediction blocks (S903). For example, a weight for each prediction block used for the weighted sum may be determined on the basis of a template matching-based cost. Also, the weight may be determined on the basis of the number of prediction blocks and the sum of template matching-based costs. Also, the weight may be determined on the basis of a value calculated by subtracting a template matching-based cost from a predefined value. Meanwhile, for example, a first prediction block among two or more prediction blocks (the first prediction block and an $n^{th}$ prediction block) may be predicted using the planar mode. Also, the first prediction block may be predicted on the basis of a size of the current block using the planar mode. Also, a weight of the first prediction block may be calculated as a predefined fixed weight value. Also, the weighted sum may be calculated from only some of the two or more prediction blocks on the basis of predefined conditions. Also, the predefined conditions may include a condition for the size of the current block. Also, the predefined conditions may include a condition for an intra prediction mode of a reconstructed block of the current block. Meanwhile, for example, the weight of the first prediction block may be calculated on the basis of an intra prediction mode of the reconstructed block (another pre-reconstructed block). Also, the first prediction block among the two or more prediction blocks may be predicted using the horizontal or vertical planer mode.

Meanwhile, the image decoding method disclosed in FIG. 8 corresponds to an embodiment of the present disclosure. Accordingly, some operations may be changed or removed, and the order of some operations may be changed. These embodiments are also included in embodiments of the present disclosure.

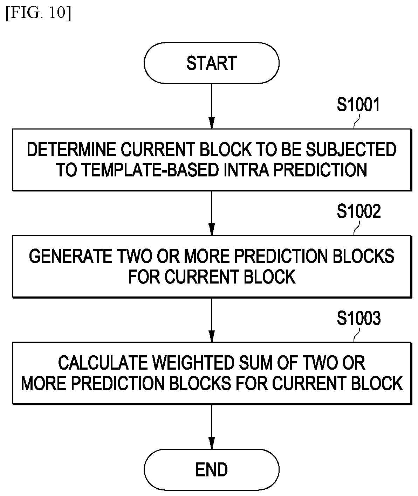

FIG. 10 is a flowchart illustrating an image encoding method that may be performed by an image encoding device according to an embodiment of the present disclosure. Since the image encoding method of FIG. 10 may be based on the above-described embodiment, the redundant description will not be reiterated.

For example, a current block may be determined to be subjected to template-based intra prediction for image encoding (S1001). Also, two or more prediction blocks for the current block may be generated on the basis of template-based intra prediction (S1002). Subsequently, a weighted sum of the two or more prediction blocks for the current block may be calculated (S1003). For example, a weight for each prediction block used for the weighted sum may be determined on the basis of a template matching-based cost. Also, the weight may be determined on the basis of the number of prediction blocks and the sum of template matching-based costs. Also, the weight may be determined on the basis of a value calculated by subtracting a template matching-based cost from a predefined value. Meanwhile, for example, a first prediction block among two or more prediction blocks (the first prediction block and an $n^{th}$ prediction block) may be predicted using the planar mode. Also, the first prediction block may be predicted on the basis of the size of the current block using the planar mode. Also, a weight of the first prediction block may be calculated as a predefined fixed weight value. Also, the weighted sum may be calculated from only some of the two or more prediction blocks on the basis of predefined conditions. Also, the predefined conditions may include a condition for the size of the current block. Also, the predefined conditions may include a condition for an intra prediction mode of a reconstructed block of the current block. Meanwhile, for example, the weight of the first prediction block may be determined on the basis of the intra prediction mode of a reconstructed block (another pre-reconstructed block). Also, the first prediction block among the two or more prediction blocks may be predicted using the horizontal or vertical planer mode.

Meanwhile, the image decoding method disclosed in FIG. 9 corresponds to an embodiment of the present disclosure. Accordingly, some operations may be changed or removed, and the order of some operations may be changed. These embodiments are also included in embodiments of the present disclosure.

Various embodiments of the present disclosure may be used solely or in combination with other embodiments.

Exemplary methods of the present disclosure are presented as a series of operations for clarity of description, but this is not intended to limit the order in which steps are performed, and steps may be performed concurrently or in a different order if required. To implement the methods according to the present disclosure, other steps may be included in addition to the exemplified steps, steps excluding some steps may be included, or some steps may be excluded and other additional steps may be included.

In the present disclosure, an image encoding device or an image decoding device that perform a certain operation (step) may perform an operation (step) of checking a condition or circumstance for performing the operation (step). For example, when it is described that a certain operation is performed when a certain condition is satisfied, the image encoding device or the image decoding device may perform an operation of determining whether the certain condition is satisfied and then perform the certain operation.

Various embodiments of the present disclosure are intended to describe representative aspects of the present disclosure rather than listing all possible combinations, and details described in various embodiments may be applied independently or in a combination of two or more.

In addition, various embodiments of the present disclosure may be implemented by hardware, firmware, software, or a combination thereof. For implementation by hardware, various embodiments of the present disclosure may be implemented by one or more application-specific integrated circuits (ASICs), digital signal processors (DSPs), digital signal processing devices (DSPDs), programmable logic devices (PLDs), field programmable gate arrays (FPGAs), a general processor, a controller, a microcontroller, a microprocessor, and the like.

Further, the image decoding device and the image encoding device to which embodiments of the present disclosure are applied may be included in a multimedia broadcasting transceiver, a mobile communication terminal, a home cinema video device, a digital cinema video device, a surveillance camera, a video chat device, a device for real-time communication such as video communication, a mobile streaming device, a storage medium, a camcorder, a video on demand (VoD) service provider, an over the top (OTT) video device, an Internet streaming service provider, a three-dimensional (3D) video device, a videophone, a medical video device, and the like, and may be used to process a video signal or a data signal. For example, the OTT video device may include a game console, a Blu-ray player, an Internet-connected television (TV), a home theater system, a smartphone, a tablet personal computer (PC), a digital video recorder (DVR), and the like.

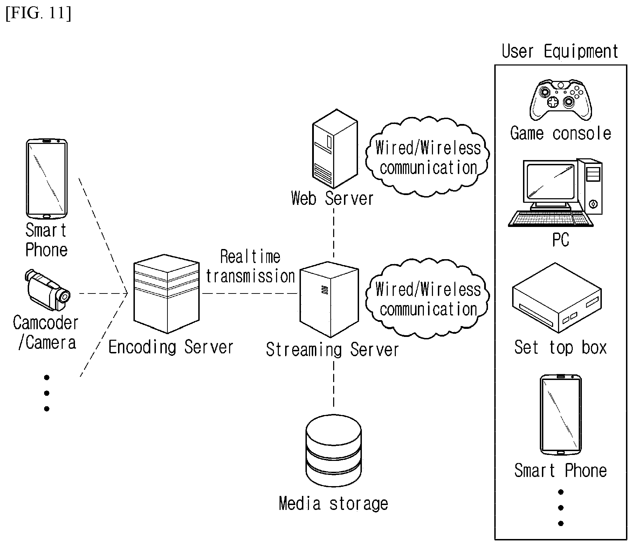

FIG. 11 is a diagram illustrating a content streaming system to which an embodiment of the present disclosure is applicable.

As shown in FIG. 11, the content streaming system to which an embodiment of the present disclosure is applied may roughly include an encoding server, a streaming server, a web server, a media storage, user equipment, and multimedia input devices.

The encoding server serves to generate a bitstream by compressing content input from the multimedia input devices such as a smartphone, a camera, a camcorder, and the like, into digital data and transmit the bitstream to the streaming server. As another example, in a case where the multimedia input devices such as a smartphone, a camera, a camcorder, and the like generate a bitstream themselves, the server may be omitted.

The bitstream may be generated using an image encoding method and/or an image encoding device to which an embodiment of the present disclosure is applied, and the streaming server may temporarily store the bitstream during a process of transmitting or receiving the bitstream.

The streaming server may serve to transmit multimedia data to the user equipment in response to a user request made through the web server, and the web server may serve as a medium that notifies users of which services are available. When a user requests a desired service from the web server, the web server may forward the request to the streaming server, and the streaming server may transmit multimedia data to the user. Here, the content streaming system may additionally include a control server, and in this case, the control server may serve to control an instruction/response between devices in the content streaming system.

The streaming server may receive the content from the media storage and/or the encoding server. For example, in the case of receiving the content from the encoding server, the content may be received in real time. In this case, the streaming server may store the bitstream for a certain period of time to provide a smooth streaming service.

Examples of the user equipment may include a cellular phone, a smartphone, a laptop computer, a digital broadcast terminal, a personal digital assistant (PDA), a portable multimedia player (PMP), a navigation device, a slate PC, a tablet PC, an ultrabook, a wearable device such as a smartwatch, smart glasses, and a head-mounted display (HMD), a digital TV, a desktop computer, digital signage, and the like.

Each server in the content streaming system may run as a distributed server, and in this case, data received by each server may be processed in a distributed manner.

The scope of the present disclosure includes software or machine-executable instructions (e.g., an operating system, applications, firmware, programs, and the like) that cause operations according to the methods of various embodiments to be performed by a device or computer, and a non-transitory computer-readable medium that stores such software or instructions and is executable by the device or computer.

[Industrial Applicability]

Embodiments of the present disclosure can be used to encode/decode an image.

**Claims**

1.　An image decoding method comprising:

24

obtaining template-based intra prediction information of a current block;

generating two or more prediction blocks for the current block on the basis of the template-based intra prediction information; and

reconstructing the current block on the basis of a weighted sum of the two or more prediction blocks,

wherein a weight for each prediction block used for the weighted sum is determined on the basis of a template matching-based cost.

2. The image decoding method of claim 1, wherein the weight is determined on the basis of the number of prediction blocks and a sum of template matching-based costs.

3. The image decoding method of claim 1, wherein the weight is determined on the basis of a value calculated by subtracting the template matching-based cost from a predefined value.

4. The image decoding method of claim 1, wherein a first prediction block among the two or more prediction blocks is predicted using a planar mode.

5. The image decoding method of claim 4, wherein the first prediction block is predicted using the planar mode on the basis of a size of the current block.

6. The image decoding method of claim 4, wherein a weight of the first prediction block is calculated as a predefined fixed weight value.

7. The image decoding method of claim 1, wherein the weighted sum is calculated from only some of the two or more prediction blocks on the basis of predefined conditions.

8. The image decoding method of claim 7, wherein the predefined conditions include a condition for a size of the current block.

9. The image decoding method of claim 7, wherein the predefined conditions include a condition for an intra prediction mode of a reconstructed block of the current block.

10. The image decoding method of claim 1, wherein a weight of a first prediction block is calculated on the basis of an intra prediction mode of a reconstructed block.

11. The image decoding method of claim 1, wherein a first prediction block among the two or more prediction blocks is predicted using a horizontal or vertical planar mode.

12. An image encoding method comprising:

determining a current block to be subjected to template-based intra prediction;

generating two or more prediction blocks for the current block on the basis of the template-based intra prediction; and

calculating a weighted sum of the two or more prediction blocks for the current block,

wherein a weight for each prediction block used for the weighted sum is determined on the basis of a template matching-based cost.

13. A computer-readable recording medium in which a bitstream generated using the image encoding method of claim 12 is stored.

14. A method of transmitting a bitstream comprising transmitting a bitstream generated using an image encoding method, wherein the image encoding method comprises:

determining a current block to be subjected to template-based intra prediction;

generating two or more prediction blocks for the current block on the basis of the template-based intra prediction; and

calculating a weighted sum of the two or more prediction blocks for the current block,

wherein a weight for each prediction block used for the weighted sum is determined on the basis of a template matching-based cost.

[FIG. 1]

[FIG. 2]

[FIG. 3]

IMAGE DECODING APPARATUS (200)

BITSTREAM → ENTROPY DECODER (210) → DEQUANTIZER (220) → INVERSE TRANSFORMER (230) → + (235) → FILTER (240) → RECONSTRUCTED IMAGE

MEMORY / DPB (250)

INTRA PREDICTION UNIT (265)

INTER PREDICTION UNIT (260)

[FIG. 4]

[FIG. 5]

[FIG. 6]

$$\omega_1 = \frac{43}{64} \times \frac{ampl(M_1)}{ampl(M_1) + ampl(M_2)}$$

$$\omega_2 = \frac{43}{64} \times \frac{ampl(M_2)}{ampl(M_1) + ampl(M_2)}$$

$$\omega_3 = \frac{21}{64}$$

$$\sum_{i=1}^{3} \omega_i \times Pred_i$$

EP 4 604 521 A1

[FIG. 7]

[FIG. 8]

```
                                      S801
                 ╭─────────────────────╮
                 │      TIMD flag       │
                 ╰─────────────────────╯
                            │
                            │           S802
                 ┌─────────────────────┐
                 │ Get intra mode candidate list │
                 └─────────────────────┘
                            │
                            │           S803
                 ┌─────────────────────┐
                 │ Get template cost of modes │
                 └─────────────────────┘
                            │
                            │           S804
                 ┌─────────────────────┐
                 │ Sorting modes based on cost │
                 └─────────────────────┘
                            │
                            │           S805
                 ┌─────────────────────┐
                 │    Select N modes    │
                 └─────────────────────┘
                            │
                            │              S806
                       ◇───────────◇      false
                       │ Fusion flag │──────────────┐
                       ◇───────────◇                │
                            │ true                   │
                            │      S807              │        S808
                 ┌─────────────────────┐   ┌─────────────────────┐
                 │ Intra prediction fusion │   │   Intra prediction   │
                 └─────────────────────┘   └─────────────────────┘
```

[FIG. 9]

```
                    ┌──────────────┐
                    │    START     │
                    └──────┬───────┘
                           │              S901
                           ▼
        ┌──────────────────────────────────────┐
        │    OBTAIN INTRA PREDICTION INFORMATION │
        │    BASED ON TEMPLATE OF CURRENT BLOCK  │
        └──────────────────┬───────────────────┘
                           │              S902
                           ▼
        ┌──────────────────────────────────────┐
        │     GENERATE TWO OR MORE PREDICTION    │
        │        BLOCKS FOR CURRENT BLOCK        │
        └──────────────────┬───────────────────┘
                           │              S903
                           ▼
        ┌──────────────────────────────────────┐
        │   RECONSTRUCT CURRENT BLOCK BASED ON   │
        │   WEIGHTED SUM OF PREDICTION BLOCKS    │
        └──────────────────┬───────────────────┘
                           │
                           ▼
                    ┌──────────────┐
                    │     END      │
                    └──────────────┘
```

[FIG. 10]

```
                    ┌─────────────┐
                    │    START    │
                    └─────────────┘
                           │           S1001
                           ▼
  ┌────────────────────────────────────────────────┐
  │  DETERMINE CURRENT BLOCK TO BE SUBJECTED         │
  │     TO TEMPLATE-BASED INTRA PREDICTION           │
  └────────────────────────────────────────────────┘
                           │           S1002
                           ▼
  ┌────────────────────────────────────────────────┐
  │  GENERATE TWO OR MORE PREDICTION BLOCKS          │
  │             FOR CURRENT BLOCK                    │
  └────────────────────────────────────────────────┘
                           │           S1003
                           ▼
  ┌────────────────────────────────────────────────┐
  │   CALCULATE WEIGHTED SUM OF TWO OR               │
  │ MORE PREDICTION BLOCKS FOR CURRENT BLOCK         │
  └────────────────────────────────────────────────┘
                           │
                           ▼
                    ┌─────────────┐
                    │     END     │
                    └─────────────┘
```

[FIG. 11]

## INTERNATIONAL SEARCH REPORT

| International application No. |
|---|
| **PCT/KR2023/015836** |

### A. CLASSIFICATION OF SUBJECT MATTER

**H04N 19/11**(2014.01)i; **H04N 19/593**(2014.01)i; **H04N 19/70**(2014.01)i; **H04N 19/176**(2014.01)i

According to International Patent Classification (IPC) or to both national classification and IPC

### B. FIELDS SEARCHED

Minimum documentation searched (classification system followed by classification symbols)

H04N 19/11(2014.01); H04N 19/105(2014.01); H04N 19/157(2014.01); H04N 19/50(2014.01); H04N 19/593(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 템플릿(template), 매치(match), 인트라(intra), 예측 (predict), 가중치(weight), 합(sum)

### C. DOCUMENTS CONSIDERED TO BE RELEVANT

| Category* | Citation of document, with indication, where appropriate, of the relevant passages | Relevant to claim No. |
|---|---|---|
| Y | CAO, Keming et al. EE2-related: Fusion for template-based intra mode derivation. JVET-W0123-v2, Joint Video Experts Team (JVET) of ITU-T SG 16 WP 3 and ISO/IEC JTC 1/SC 29, 23rd Meeting, by teleconference. pp. 1-4, 07 July 2021.<br>See pages 1-2. | 1-14 |
| Y | KR 10-2019-0056332 A (ELECTRONICS AND TELECOMMUNICATIONS RESEARCH INSTITUTE) 24 May 2019 (2019-05-24)<br>See paragraphs [0098], [0122]-[0123], [0130], [0169], [0492]-[0493], [0563] and [0567]; claim 1; and figure 2. | 1-14 |
| Y | LI, Xinwei et al. Non-EE2: On planar horizontal mode and planar vertical mode. JVET-AA0104-v2, Joint Video Experts Team (JVET) of ITU-T SG 16 WP 3 and ISO/IEC JTC 1/SC 29, 27th Meeting, by teleconference. pp. 1-3, 18 July 2022.<br>See pages 1-2. | 11 |
| A | US 2022-0232241 A1 (LEMON INC.) 21 July 2022 (2022-07-21)<br>See paragraphs [0203]-[0209]. | 1-14 |

☑ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **22 January 2024** | **22 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/015836** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2021-0154760 A (ELECTRONICS AND TELECOMMUNICATIONS RESEARCH INSTITUTE) 21 December 2021 (2021-12-21)<br>See claim 1. | 1-14 |

Form PCT/ISA/210 (second sheet) (July 2022)

**INTERNATIONAL SEARCH REPORT**
Information on patent family members

International application No.

**PCT/KR2023/015836**

| Patent document cited in search report | | | Publication date (day/month/year) | Patent family member(s) | | | Publication date (day/month/year) |
|---|---|---|---|---|---|---|---|
| KR | 10-2019-0056332 | A | 24 May 2019 | CN | 111373755 | A | 03 July 2020 |
| | | | | KR | 10-2023-0151971 | A | 02 November 2023 |
| | | | | KR | 10-2595070 | B1 | 27 October 2023 |
| | | | | US | 11350107 | B2 | 31 May 2022 |
| | | | | US | 2020-0366900 | A1 | 19 November 2020 |
| | | | | US | 2022-0272357 | A1 | 25 August 2022 |
| | | | | US | 2023-0370618 | A1 | 16 November 2023 |
| | | | | WO | 2019-098758 | A1 | 23 May 2019 |
| US | 2022-0232241 | A1 | 21 July 2022 | CN | 114765685 | A | 19 July 2022 |
| | | | | US | 11290736 | B1 | 29 March 2022 |
| KR | 10-2021-0154760 | A | 21 December 2021 | | None | | |

Form PCT/ISA/210 (patent family annex) (July 2022)